Europäisches Patentamt

European Patent Office

Office européen des brevets

(11) Veröffentlichungsnummer: **0 207 509 B1**

# (12) EUROPÄISCHE PATENTSCHRIFT

(45) Veröffentlichungstag der Patentschrift: **23.10.91**

(51) Int. Cl.5: **C01B 17/027**

(21) Anmeldenummer: **86109017.3**

(22) Anmeldetag: **02.07.86**

(54) **Verfahren und Trennbehälter zum Trennen einer Schwefel/Lauge-Suspension.**

(30) Priorität: **03.07.85 DE 3523846**

(43) Veröffentlichungstag der Anmeldung:
**07.01.87 Patentblatt 87/02**

(45) Bekanntmachung des Hinweises auf die
Patenterteilung:
**23.10.91 Patentblatt 91/43**

(84) Benannte Vertragsstaaten:
**AT BE DE FR GB IT NL**

(56) Entgegenhaltungen:
**DE-B- 2 635 862**
**DE-C- 2 904 845**

(73) Patentinhaber: **Linde Aktiengesellschaft**
**Abraham-Lincoln-Strasse 21**
**W-6200 Wiesbaden(DE)**

(72) Erfinder: **Kliem, Erhard, Dipl.-Ing.**
**Am Mitterfeld 1b**
**W-8196 Eurasburg(DE)**
Erfinder: **Kunz, Alfred, Dipl.-Ing.**
**Gartenstrasse 3**
**W-8021 Grossdingharting(DE)**
Erfinder: **Weber, Günter, Dr. Dipl.-Chem.**
**Berger Weg 6**
**W-8157 Linden(DE)**

(74) Vertreter: **Schaefer, Gerhard, Dr.**
**Linde Aktiengesellschaft Zentrale Patentab-**
**teilung**
**W-8023 Höllriegelskreuth(DE)**

## Beschreibung

Die Erfindung betrifft ein Verfahren zum Trennen einer Schwefel/Lauge-Suspension von ihrem Schwefel, bei dem die Suspension auf eine Temperatur oberhalb der Schmelztemperatur des Schwefels angewärmt und unter Druck einem Trennbehälter mit Trennraum, Laugeraum und Schwefelraum zugeführt wird, aus dem einerseits abgesunkener flüssiger Schwefel und andererseits Lauge kontinuierlich abgezogen werden, sowie einen Trennbehälter zur Durchführung des Verfahrens.

Aus der DE-C-29 04 845 ist ein derartiges Verfahren bekannt, das insbesondere zum Trennen einer sogenannten Stretfordwaschlauge von ihrem Schwefel dient. Bei diesem bekannten Verfahren wird in jedem Trennbehälter oberhalb der Suspension ein Dampfpolster aufrechterhalten, mit dem der Trenndruck, unter dem der Trennbehälter steht, bei Sättigungsdruck gehalten wird, während die Waschlauge über einen Überlauf abgezogen wird. Weiterhin wird ein Trennbehälter zur Durchführung des Verfahrens gestützt, der eine Trennkammer aufweist, an die einerseits über ein Überlaufwehr eine Waschlaugenkammer und andererseits über eine Durchtauchwand eine Schwefelkammer angeschlossen ist, wobei die Behälterräume über der Trennkammer, der Waschlaugenkammer und der Schwefelkammer miteinander verbunden und als Dampfraum ausgebildet sind. An diesen Dampfraum ist dabei eine Trenndruck-Regeleinrichtung angeschlossen.

Das bekannte Verfahren hat den Nachteil, daß immer ein bestimmtes Dampfpolster aufrechterhalten werden muß, um den Sättigungsdruck im Trennraum einzuhalten. Hierdurch besteht die Gefahr, daß bei unvorhergesehenen Störungen, während derer kein Dampfpolster aufgebaut wird, die Trennung der Schwefel/Waschlauge-Suspension nicht mehr gewährleistet ist.

Der vorliegenden Erfindung liegt daher die Aufgabe zugrunde, ein Verfahren der eingangs genannten Art so auszugestalten, daß dar erwähnte Nachteil des bekannten Verfahrens überwunden und ein auf Störungen wenig anfälliges System bereitgestellt wird.

Diese Aufgabe wird erfindungsgemäß dadurch gelöst, daß Trenn- und Laugeraum überflutet gefahren werden.

Das Anwärmen der Schwefel/Lauge-Suspension bewirkt, daß der Schwefel von der festen in die flüssige Phase übergeht. In dem Trennbehälter wird sodann das Flüssigschwefel/ Lauge-Gemisch getrennt, bevorzugt durch Dekantieren. Dabei wird die Lauge als leichte Fraktion mit der geringeren Stoffdichte aus dem Laugeraum nach oben so abgeführt, daß der Trenn- und Laugeraum ohne Gas/Dampfpolster stets überflutet ist. Der Flüssigschwefel als die schwerere Fraktion mit der größeren Stoffdichte gelangt im unteren Teil des Trennbehälters in den angrenzenden Schwefelraum, aus dem der Flüssigschwefel kontinuierlich abgeführt wird.

Die Erfindung macht sich somit die unterschiedlichen Dichten der Lauge und des Schwefels zunutze, die es erlauben, die Lauge oben aus dem Trennbehälter abzuziehen und hierdurch Trennraum und Lauge überflutet, d.h. ohne Gas/Dampfpolster zu fahren. Da der Unterschied in den Dichten grundsätzlich immer gegeben ist, kann auch stets eine vollständige Trennung in die beiden Fraktionen Flüssigschwefel und Lauge erfolgen. Damit ist das erfindungsgemäße Verfahren gegen Störungen wenig anfällig.

Die wesentliche Voraussetzung für die Durchführung des erfindungsgemäßen Verfahrens besteht darin, daß die Suspension auf eine Temperatur gebracht wird, die oberhalb der Schmelztemperatur des Schwefels liegt. In Weiterbildung des Erfindungsgedankens ist die Anwärmung der Suspension bzw. die Verflüssigung des Schwefels mit Hilfe von Dampf in einem Dampfstrahler durchzuführen, der vor dem Trennbehälter angeordnet ist. Um den Schwefel flüssig und pumpfähig zu halten, sind zusätzlich in allen Räumen des Trennbehälters Heizvorrichtungen vorgesehen, mit denen die Temperatur stets oberhalb der Schmelztemperatur des Schwefels gehalten werden kann. Dies ist insbesondere für den Fall von Bedeutung, daß der Dampfstrahler einer Störung unterliegt.

In vielen Fällen ist es möglich, daß in der Lauge noch ein gewisser Anteil an Schwefel vorhanden sein kann, d.h. die Trennung des Schwefels nicht aus der gesamten Lauge erfolgen muß. Es ist daher zweckmäßig, wenn der Schwefel nur aus einem Teilstrom der Schwefel/Lauge-Suspension abgetrennt wird. Dies gilt beispielsweise für den bereits erwähnten Fall der sogenannten Stretford-Waschlauge oder einer anderen üblichen im Zuge der Gasaufbereitung oder Gasreinigung verwendeten Waschlauge, bei der Schwefel gebildet wird.

Wie schon beschrieben, gelangt der Flüssigschwefel über eine Überlaufvorrichtung, vorzugsweise über ein oder beliebig viele parallel angeordnete Überlaufrohre in den Schwefelraum, aus dem er kontinuierlich über eine Niveauregelung abgeführt wird. In dem Schwefelraum wird dabei zweckmäßig über der Flüssigkeit ein Gas/Dampfpolster aufrechterhalten, mit dem der Druck im Schwefelraum auf einen dem Sättigungsdruck im Trenn und Laugeraum entsprechenden Wert gehalten wird. Das Gas/Dampfpolster besteht dabei hauptsächlich aus Inertgas und/oder Wasserdampf und/oder Laugenbrüden sowie in der Lauge gelöstem Gas. Diese Verfahrensweise bietet den Vorteil, daß sich nichtvollständig abgetrennte Waschlauge oder andere, spezifisch leichtere Verunreinigungen an der Oberfläche des flüssigen Schwefels ansammeln und von dort diskontinuierlich abgezogen werden können.

Die Erfindung betrifft überdies einen Trennbehälter zur Durchführung des Verfahrens mit Trenn- und Laugeraum sowie einem Schwefelraum, einer Zuführung für die Schwefel/ Lauge-Suspension, einer Abzugseinrichtung für die Lauge und einer Abführungseinrichtung für den flüssigen Schwefel. Dieser Trennbehälter ist dadurch gekennzeichnet, daß der Schwefelraum durch eine Trenneinrichtung von dem übrigen Trennbehälter abgegrenzt und über mindestens eine Überlaufvorrichtung mit dem Laugeraum verbunden ist. Erfindungsgemäß ist damit der Schwefelraum insbesondere vom Laugeraum beispielsweise durch eine Wand über den gesamten Durchmesser des Trennbehälters getrennt.

Als weiteres Kennzeichen des Trennbehälters ist an dessen Eintritt, d.h. Eintritt für die Suspension, ein Einlaufwehr angeordnet. Diese Maßnahme bewirkt, daß der Trennraum beruhigt wird, d.h. keine größeren Turbulenzen durch die einströmende Suspension auftreten, die eine Auftrennung in die Laugefraktion und die Flüssigschwefelfraktion erschweren könnten. Überdies findet innerhalb des Einlaufwehrs bereits eine grobe Auftrennung in die beiden genannten Fraktionen statt.

Ebenfalls kennzeichnend für den Trennbehälter ist der Laugeraum überdies mit einer Sättigungsdruck-Halteeinrichtung oder einer Trennschicht-Regeleinrichtung verbunden. Erstgenanntes bewirkt u.a., daß immer nur so viel Lauge abgeführt wird, daß zum einen der Trenn- und Laugeraum stets überflutet ist und zum anderen im Trennbehälter der Sättigungsdruck aufrechterhalten bleibt. Die zweite genannte Alternative führt ebenfalls dazu, daß der Trenn- und Laugeraum stets überflutet ist.

Als weiteres Kennzeichen des Trennbehälters ist in der Zuleitung für die Suspension ein Dampfstrahler angeordnet, der sowohl die Anwärmung der Suspension und damit Schwefelverflüssigung bewirkt, als auch mit dazu beiträgt, daß die Schwefel/Lauge-Suspension in den unter dem Sättigungsdruck stehenden Trennbehälter befördert wird. Hierzu ist überdies in der Zuleitung eine Pumpe vorgesehen.

Ebenfalls kennzeichnend für den Trennbehälter ist jeder Raum mit einer Heizeinrichtung, beispielsweise einer Dampfheizung, ausgestattet, um die Temperatur stets oberhalb der Schmelztemperatur des Schwefels zu halten.

Das erfindungsgemäße Verfahren eignet sich für jede Schwefelabtrennung aus einer beliebigen Lauge.

Im folgenden sei das erfindungsgemäße Verfahren anhand eines in drei Figuren schematisch dargestellten Ausführungsbeispiels näher erläutert.

Es zeigen:

| Figur 1 | horizontalen Trennbehälter mit Überlaufrohr |
| Figur 2 | vertikalen Trennbehälter |
| Figur 3 | horizontalen Trennbehälter mit Durchlaufrohr. |

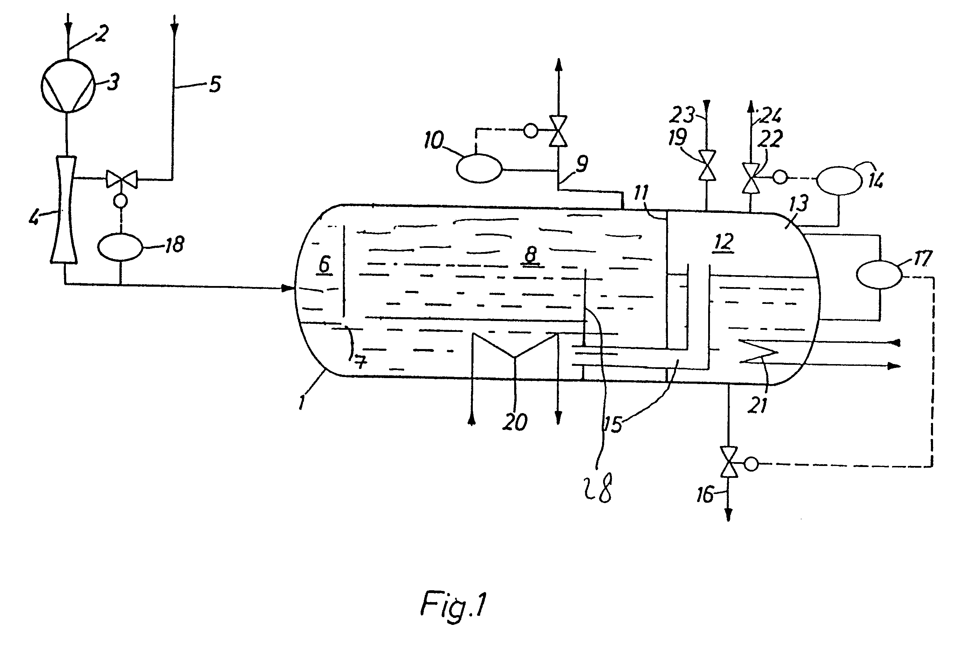

Gemäß Figur 1 werden einem horizontalen Trennbehälter über Leitung 2 5000 kg/h einer Schwefel/Lauge-Suspension mit einer Temperatur von 30° C und einem Druck von 0,2 bar zugeführt, die 1000 kg/h Schwefel enthält. In der Leitung 2 ist eine Pumpe 3 und ein Dampfstrahler 4 angeordnet. Die Pumpe 3 fördert die Suspension auf einen Druck von 3,0 bar und im Dampfstrahler wird die Suspension mittels über Leitung 5 zugeführtem überhitztem Dampf (50 kmol/h) über einen Temperaturregler 18 auf eine Temperatur angewärmt, die oberhalb der Schmelztemperatur des Schwefels ( = 119° C) liegt, also beispielsweise 130° C, und sodann in den Trennbehälter 1 befördert.

Die Suspension tritt in ein Einlaufwehr 6 ein, in dem bereits ein Teil des infolge der Anwärmung im Dampfstrahler verflüssigten Schwefels absinkt und über eine Öffnung 7 in den unteren Bereich des Trennbehälters gelangt. Das Flüssigschwefel/Lauge-Gemischgelangt ober- und unterhalb des Einlaufwehres in einen Trenn- und Laugeraum 8.

In dem Trennraum 8 erfolgt bei ausreichender Verweilzeit durch Dekantieren die Auftrennung in eine Laugefraktion und in eine Flüssigschwefelfraktion. Die leichte Fraktion (4.900 kg/h Lauge)mit der geringeren Stoffdichte, gelangt über ein Überlaufwehr 28 vom Trenn- in den Laugeraum und wird über Leitung 9 und Sättigungs-druckhaltung 10 nach oben kontinuierlich so abgeführt, daß der Trenn- und Laugeraum ohne Gas/Dampfpolster stets überflutet ist. Die Lauge enthält dabei weniger als 1 kg/h Schwefel.

Der Flüssigschwefel (schwere Fraktion) mit der größeren Dichte gelangt im unteren Teil des Trennbehälters über ein Überlaufrohr 15 in einen mittels einer Wand 11 abgetrennten Schwefelraum 12, aus dem kontinuierlich über Leitung 16 und eine Niveauregelung 17 Flüssigschwefel in einer Menge von 1000 kg/h abgezogen wird.

In dem Schwefelraum wird über Handregulierventil 19 und Regelventil 22 $N_2$ oder ein anderes Inertgas über Leitung 23 zugeführt bzw. über Leitung 24 abgelassen und damit ein Gaspolster 13 über dem Flüssigschwefel aufgebaut, dessen Druck mit einer Druckhalteeinrichtung 14 auf einem Wert gehalten wird, der dem Sättigungsdruck, gemessen bei 10, des Trenn- und Laugeraums 8 entspricht. Der Druck bei 14 bleibt im stationären Zustand konstant.

Um die Temperatur im Trennbehälter 1 stets oberhalb der Schmelztemperatur des Schwefels zu halten, sind überdies Heizungen 20, 21 vorgesehen, die mit Dampf betrieben werden.

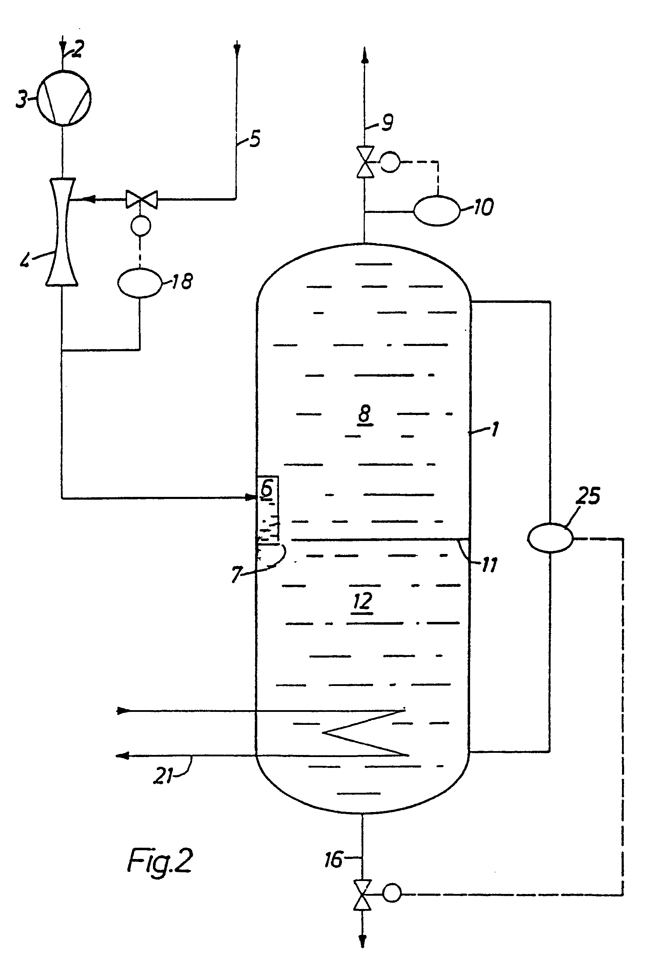

Bei dem Ausführungsbeispiel gemäß Figur 2 sind gleiche Teile mit gleichen Bezugsziffern versehen.

Im Unterschied zum Trennbehälter der Figur 1 ist der Trennbehälter gemäß Figur 2 vertikal ausgebildet. Im Trennbehälter wird das Flüssigschwefel/Lauge-Gemisch bei ausreichender Verweilzeit durch Dekantierung getrennt, d.h. die Lauge als leichte Fraktion mit der geringeren Stoffdichte über die Sättigungsdruckhaltung 10 und Leitung 9 nach oben kontinuierlich abgezogen, so daß der Trennbehälter ohne Gas/Dampfpolster stets überflutet ist.

Der Flüssigschwefel als schwere Fraktion mit der größeren Dichte gelangt in den unteren Teil des Trennbehälters. Zur Aufrechterhaltung eines konstanten Flüssigschwefelstandes ist eine Trennschicht 11 und ein Trennschichtregler 25 vorgesehen, über den der Flüssigschwefel kontinuierlich nach unten über Leitung 16 abgeführt wird.

Am Eintritt der Suspension in den Trennbehälter 1 ist ein Einlaufwehr 6 angeordnet. Um den Schwefel flüssig und dampfförmig zu halten, ist eine Dampfheizung 21 eingebaut, mit der die Temperatur stets oberhalb der Schmelztemperatur des Schwefels gehalten werden kann.

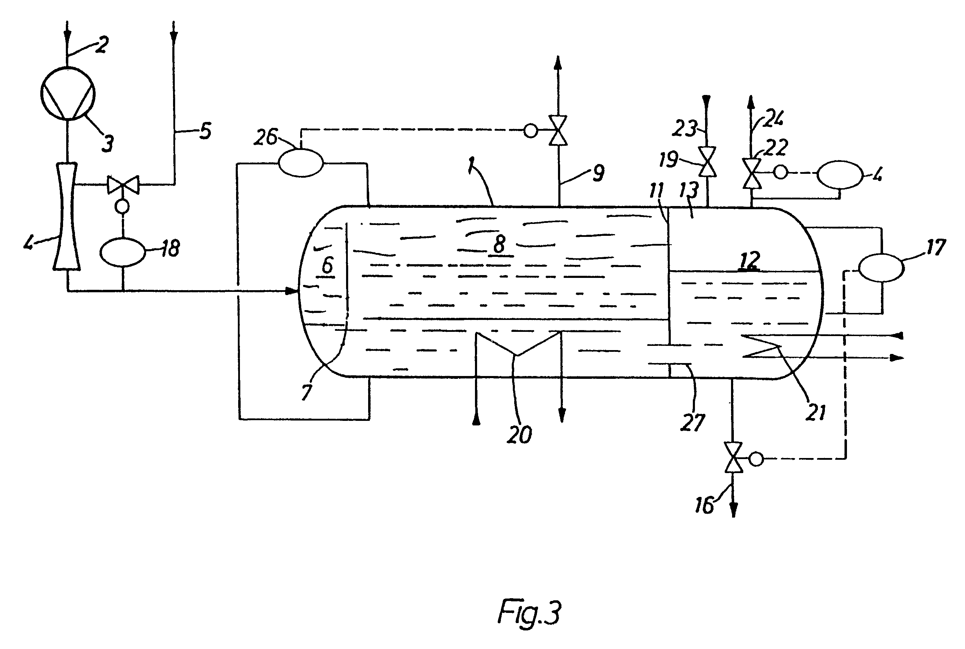

Der Trennbehälter gemäß Figur 3 entspricht im wesentlichen dem der Figur 1. Auch hier wird das Flüssigschwefel/Lauge-Gemisch bei ausreichender Verweilzeit durch Dekantierung getrennt. Die Lauge als leichte Fraktion mit der geringeren Dichte wird dabei über Leitung 9 aus dem Trenn- und Laugeraum über eine Trennschichtregelung 26 bei Sättigungsdruck nach oben kontinuierlich so abgeführt, daß der Trenn- und Laugeraum ohne Gas/Dampfpolster stets überflutet ist.

Der Flüssigschwefel als schwere Fraktion mit der größeren Dichte gelangt im unteren Teil des Trennbehälters über ein Durchlaufrohr 27 in den Schwefelraum, aus dem der Schwefel kontinuierlich über eine Niveauregelung 17 abgezogen wird. Die Anordnung entspricht ansonsten der von Figur 1.

## Patentansprüche

1. Verfahren zum Trennen einer Schwefel/Lauge-Suspension von ihrem Schwefel, bei dem die Suspension auf eine Temperatur oberhalb der Schmelztemperatur des Schwefels angewärmt und unter Druck einem Trennbehälter mit Trennraum, Laugeraum und Schwefelraum zugeführt wird, aus dem einerseits abgesunkener flüssiger Schwefel und andererseits Lauge kontinuierlich abgezogen werden, dadurch gekennzeichnet, daß Trennraum und Laugeraum überflutet gefahren werden.

2. Verfahren nach Anspruch 1, dadurch gekennzeichnet, daß die Suspension vor dem Trennbehälter in einem Dampfstrahler angewärmt wird.

3. Verfahren nach Anspruch 1 oder 2, dadurch gekennzeichnet, daß der Schwefel aus einem Teilstrom der Schwefel/ Lauge-Suspension abgetrennt wird.

4. Verfahren nach einem der Ansprüche 1 bis 3, dadurch gekennzeichnet, daß im Schwefelraum ein Gas/Dampf-Polster aufrechterhalten wird, mit dem der Druck im Schwefelraum auf einem dem Sättigungsdruck im Trenn- und Laugeraum entsprechenden Wert gehalten wird.

5. Trennbehälter zur Durchführung des Verfahrens nach einem der Ansprüche 1 bis 4 mit Trenn- und Laugeraum sowie einem Schwefelraum, einer Zuführung für die Schwefel/Lauge-Suspension, einer Abzugseinrichtung für die Lauge und einer Abführeinrichtung für den flüssigen Schwefel, **dadurch gekennzeichnet**, daß der Schwefelraum (13) durch eine Trenneinrichtung (11) von dem übrigen Trennbehälter abgegrenzt und über mindestens eine Überlaufvorrichtung (15, 27) mit dem Laugeraum (8) verbunden ist, daß am Eintritt des Trennbehälters (1) ein Einlaufwehr (6) angeordnet ist, daß der Laugeraum (8) mit einer Sättigungsdruck-Halteeinrichtung (10) oder mit einer Trennschicht-Regeleinrichtung (26) verbunden ist, daß in der Zuleitung (2) ein Dampfstrahler (4) angeordnet ist, daß in jedem Raum eine Heizeinrichtung (20, 21) angeordnet ist und daß zwischen Trenn- und Laugeraum (8) ein Überlaufwehr (28) für die Lauge vorhanden ist.

## Claims

1. A process for separating a sulphur/lye suspension from its sulphur, wherein the suspension is heated to a temperature above the melting temperature of the sulphur and is fed under pressure to a separating container comprising a separating chamber, a lye chamber and a sulphur chamber, from which on the one hand deposited liquid sulphur and on the other hand lye are continuously discharged, characterised in that the separating chamber and the lye chamber are flooded.

2. A process as claimed in Claim 1, characterised in that prior to the separating chamber the suspension is heated in a steam jet apparatus.

3. A process as claimed in Claim 1 or 2, characterised in that the sulphur is separated from a sub-stream of the sulphur/lye suspension.

4. A process as claimed in one of Claims 1 to 3, characterised in that a gas/steam cushion is maintained in the sulphur chamber whereby the pressure in the sulphur chamber is maintained at a value corresponding to the saturation pressure in the separating and lye chamber.

5. A separating container for the implementation of the process claimed in one of Claims 1 to 4, with a separating chamber, a lye chamber and a sulphur chamber, a supply line for the sulphur/lye suspension, a discharge device for the lye, and a discharge device for the liquid sulphur, characterised in that the sulphur chamber (13) is delimited from the remainder of the separating container via a separating device (II) and is connected to the lye chamber (8) via at least one overflow device (15, 27), that an inlet weir (6) is arranged at the inlet of the separating container (1), that the lye chamber (8) is connected to a device (10) for maintaining the saturation pressure or to a separating layer regulating device (26), that a steam jet apparatus (4) is arranged in the supply line (2), that a heating device (20, 21) is arranged in each chamber, and that an overflow weir (28) for the lye is arranged between the separating chamber and the lye chamber (8).

**Revendications**

1. Procédé de séparation du soufre d'une suspension soufre/lessive de lavage, dans lequel la suspension est chauffée à une température supérieure à la température de fusion du soufre et est envoyée sous pression à une enceinte de séparation comprenant zone de séparation, zone réservée à la lessive et zone réservée au soufre, enceinte dont on retire en continu, d'une part, le soufre liquide séparé par précipitation et, d'autre part, la lessive de lavage, caractérisé en ce que la zone de séparation et la zone réservée à la lessive opèrent par trop-plein.

2. Procédé selon la revendication 1, caractérisé en ce que la suspension, préalablement à son entrée dans le réservoir de séparation, est chauffée par un hydro-éjecteur.

3. Procédé selon la revendication 1 ou 2, caractérisé en ce que le soufre est séparé d'un courant partiel de la suspension soufre/lessive de lavage.

4. Procédé selon l'une quelconque des revendications 1 à 3, caractérisé en ce que l'on maintient, dans la zone réservée au soufre, une atmosphère gaz/vapeur à pression constante, la pression dans ladite zone étant maintenue à une valeur correspondant à la pression de saturation dans la zone de séparation et la zone réservée à la lessive.

5. Enceinte de séparation pour la mise en oeuvre du procédé selon les revendications 1 à 4, comportant zone de séparation, zone réservée à la lessive et zone réservée au soufre, conduite d'alimentation en suspension soufre/lessive de lavage, moyen de récupération de la lessive et moyens d'évacuation du soufre liquide, ladite enceinte étant caractérisée en ce que la zone (13) réservée au soufre est séparée du reste de l'enceinte de séparation par une partition (11) et est au moins reliée à la zone (8) réservée à la lessive par au moins un déversoir de trop-plein (15, 27), en ce que l'entrée de l'enceinte de séparation (1) comporte une paroi déflectrice (6), en ce que la zone (8) réservée à la lessive est reliée à une vanne asservie à la pression de saturation (10) ou asservie à un organe de contrôle du niveau de séparation des phases (26), en ce que la conduite d'alimentation (2) est munie d'un hydro-éjecteur (4), en ce que chaque zone comporte des moyens de chauffage (20, 21) et en ce qu'un déversoir (28) de trop-plein de la lessive de lavage est disposé entre la zone de séparation et la zone réservée à la lessive (8).

Fig.1

Fig.2

Fig.3